# EUROPEAN PATENT SPECIFICATION

(11) **EP 2 219 841 B1**
(45) Date of publication and mention of the grant of the patent: **18.05.2011**
(21) Application number: 08842757.0
(22) Date of filing: 25.09.2008
(51) Int. Cl.: B29C 33/40, B29D 11/00, C08F 8/06

(54) **MOLDS FOR PRODUCTION OF OPHTHALMIC DEVICES AND METHOD FOR THE MANUFACTURE OF THE MOLDS**
FORMEN ZUR HERSTELLUNG VON OPHTHALMISCHEN LINSEN UND VERFAHREN ZUR HERSTELLUNG DER FORMEN
MOULES POUR LA FABRICATION DE DISPOSITIFS OPHTALMIQUES ET PROCEDE POUR LA FABRICATION DES MOULES

(30) Priority: 26.10.2007 US 924775
(43) Date of publication of application: 25.08.2010
(73) Proprietor: Bausch & Lomb Incorporated, Rochester, NY 14604-2701 (US)
(72) Inventor: BARROWS, Daniel, P., Rochester, NY 14620 (US); VAQUERO, Edward, A., Fairport, NY 14450 (US)
(74) Representative: Glas, Holger
(86) International application number: PCT/US2008/077604
(87) International publication number: WO 2009/055188

(56) References cited:
- EP-A- 0 472 303
- WO-A-2005/066255

## Description

### BACKGROUND OF THE INVENTION

### 1. Technical Field

The present invention generally relates to molds for the production of ophthalmic devices such as contact lenses, intraocular lenses, and other ophthalmic products.

### 2. Description of the Related Art

In general, molds used in the manufacture of ophthalmic devices such as soft (hydrogel) contact lenses have been made from a variety of rigid thermoplastic resins. For example, U.S. Patent Nos. 5,540,410 and 5,674,557 disclose mold halves made from polystyrene, polyvinyl chloride, polyethylene, polypropylene, copolymers of polystyrene with acrylonitrile and/or butadiene, acrylates such as polymethyl methacrylate, polyacrylontrile, polycarbonate, polyamides such as nylons, polyesters, polyolefins such as polyethylene, polypropylene and copolymers thereof, polyacetal resins, polyacrylethers, polyarylether sulfones, and various fluorinated materials such as fluorinated ethylene propylene copolymers and ethylene fluoroethylene copolymers

U.S. Patent No. 4,661,573 discloses, for the processing of fluorosilicone copolymers into extended wear lenses, molds formed of polypropylene, polyethylene, nylon, Teflon^{®}, glass, or aluminum having its mold surfaces coated with Teflon^{®} polymer.

The manufacturers of soft contact lenses have discovered that if the molds used to make the lenses are sufficiently inexpensive, it is more economical to discard the molds after production of the lenses from the molds than it is to clean the molds to be reused. Polypropylene is a good example of an inexpensive resin that has been used to make molds that can be discarded at minimal cost. Another advantage of polypropylene is that unlike many resins, polypropylene can resist interaction with the monomers used to make the contact lenses. The ability to resist chemical interaction prevents the lens and the mold from adhering to each other and simplifies their separation following lens production.

Despite these benefits, however, polypropylene lens molds also suffer from several known disadvantages. One disadvantage is polypropylene's relatively low dimensional stability. As mentioned in U.S. Patent No. 5,674,557, polypropylene partly crystallizes during cooling from the melt and is, therefore, subject to shrinkage, causing difficulties in controlling dimensional changes after injection molding. To improve dimensional stability, manufacturers can make polypropylene lens molds thicker. However, while thicker polypropylene molds can have greater stability, they also require additional cooling time. The additional time needed to cool the thicker molds decreases the number of molds that can be made per machine per unit of time. Furthermore, thicker and therefore larger , polypropylene molds can limit the number of molds per machine, thereby reducing product throughput. Finally, polypropylene's relatively poor dimensional stability limits manufacturing yield, because the molds may need to be stored before use, for periods of up to several weeks in some cases, and many polypropylene molds fail to maintain dimensional stability over time to a degree that eventually renders them unfit for lens production.

In addition to having relatively poor dimensional stability, polypropylene has other disadvantages. Polypropylene is a translucent resin that reduces the transmission of light. Typically, polypropylene allows only about ten percent of light to pass through it. Poor light transmission reduces the speed of polymerization. Furthermore, the absorption of oxygen by the molds, commonly experienced with polypropylene molds, can influence lens quality. When the absorbed oxygen diffuses out during lens molding, polymerization can be affected, and the lens' surface quality can suffer as a result.

Several alternative resins offer greater dimensional stability and light transmittance than polypropylene. For example, polycarbonate and polystyrene are more amorphous resins and, therefore, have greater dimensional stability than polypropylene. Moreover, these and other "clear" resins generally transmit at least 50% and often more than 70% of light. However, although polycarbonate and polystyrene resins offer greater dimensional stability and light transmittance, they are vulnerable to chemical interaction with the monomers used in many soft contact lenses (e.g., N-vinylpyrrolidone and N,N-dimethylacrylamide). Chemical interaction between the lens monomers and the lens molds can cause the lens and the mold to adhere to each other and, in a worst case scenario, the lens and the mold can become permanently joined. Moreover, in addition to being susceptible to chemical interaction, many clear resins are more expensive than polypropylene and are, therefore, too costly to discard.

Molds for making soft contact lenses have also been treated to affect their surface properties. For example, U.S. Patent No. 4,159,292 discloses the use of silicone wax, stearic acid, and mineral oil as additives for plastic mold compositions to improve the release of the contact lens from the plastic molds. U.S. Patent No. 5,639,510 discloses a surface-applied surfactant in the form of a uniform layer or very thin film or coating to assist in the release from each other of mold components of a multi-part mold employed in the molding of hydrophilic contact lenses. Polymeric surfactants that can be used include polyoxyethylene sorbitan mono-oleates which are applied to a non-optical surface of the mold, but do not cover the optical surface of the mold. U.S. Patent No. 5,690,865 discloses an internal mold release agent such as waxes, soaps, and oils, including a polyethylene wax having a molecular weight of 5,000 to 200,000 or a silicone polymer having a molecular weight of 2,000 to 100,000.

The European Patent Application 0 472 303 A2 discloses a method of producing a contact lens comprising the step of treating a surface of a hydrophobic casting mould with electrical corona discharge.

Accordingly, there is a continued need to provide improved molds for manufacturing ophthalmic devices such as contact lenses and other ophthalmic articles placed in or on the eye.

### SUMMARY OF THE INVENTION

In accordance with one embodiment of the present invention, a mold assembly for the manufacture of at least one ophthalmic device used in or on the eye is provided, the mold assembly comprising a mateable pair of mold parts wherein at least one of the mold parts comprises a polymeric resin comprising a polymer backbone and one or more pendent groups having peroxide functionality and covalently linked to the polymer backbone.

In accordance with a second embodiment of the present invention, a mold assembly for the manufacture of at least one ophthalmic device used in or on the eye is provided, the mold assembly comprising a mateable pair of mold parts wherein at least one of the mold parts is made from a polymeric resin comprising a polymer backbone and one or more pendent groups having peroxide functionality and covalently linked to the polymer backbone.

In accordance with a third embodiment of the present invention, a method of preparing a mold assembly for the manufacture of at least one ophthalmic device used in or on the eye is provided, the method comprising the step of injection molding at least one of the parts of a mold assembly comprising at least one anterior and one posterior mold part, wherein at least one of the anterior and one posterior mold part comprises a polymeric resin comprising a polymer backbone and one or more pendent groups having peroxide functionality and covalently linked to the polymer backbone.

In accordance with a fourth third embodiment of the present invention, a method of molding an ophthalmic device for use in or on the eye is provided, the method comprising the steps (a) providing a mold assembly comprising at least one anterior and one posterior mold part for production of the ophthalmic device wherein at least one of the anterior and one posterior mold part comprises a polymeric resin comprising a polymer backbone and one or more pendent groups having peroxide functionality and covalently linked to the polymer backbone; and (b) cast molding the at least one ophthalmic device using the mold assembly.

It is believed that a polymeric resin comprising a polymer backbone and one or more pendent groups having peroxide functionality or a grafted polymeric product thereof for use in forming a mold assembly is relatively more polar than polypropylene which has been typically used as molds. Thus, without wishing to be bound by theory, it is believed that the peroxide functionality on the polymeric backbone of the polymeric resin renders the mold assembly relatively more lubricious than a mold assembly formed from a polyolefin such as polypropylene. Accordingly, when casting, for example, a silicone hydrogel in the mold, the hydrophilic monomer in the silicone hydrogel forming monomer mixture can be driven to the lens surface during the cast molding process thereby rendering the lens surface more lubricious and wettable. In addition, an ophthalmic lens formed in the mold assembly is believed to be able to be more easily released from the mold thereby resulting in a lens having improved surface characteristics.

### BRIEF DESCRIPTION OF THE DRAWINGS

FIG. 1 is a schematic exploded view of a representative mold assembly according to an embodiment of the present invention.
FIG. 2 is a schematic cross-sectional view of the mold assembly of FIG. 1 assembled for cast molding a contact lens.

### DETAILED DESCRIPTION OF THE PREFERRED EMBODIMENTS

One embodiment of the present invention is directed to a mold assembly for the manufacture of at least one ophthalmic device used in or on the eye. Although this embodiment of the present invention is applicable to the molding of a variety of ophthalmic devices placed in or on the eye, for example, intraocular lenses, contact lenses, delivery devices for therapeutic agents, and the like, the invention is especially useful and advantageous for cast molding contact lenses such as soft (hydrogel) contact lenses. By way of example, therefore, the invention will be described herein with reference to the molding of a contact lens.

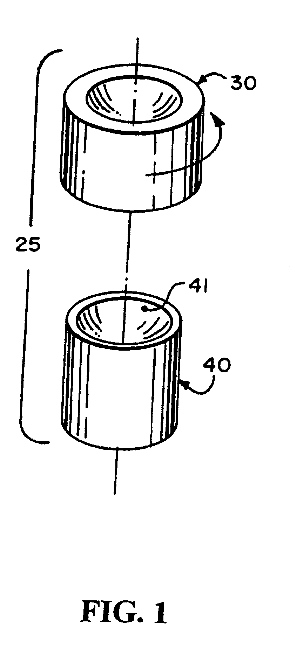

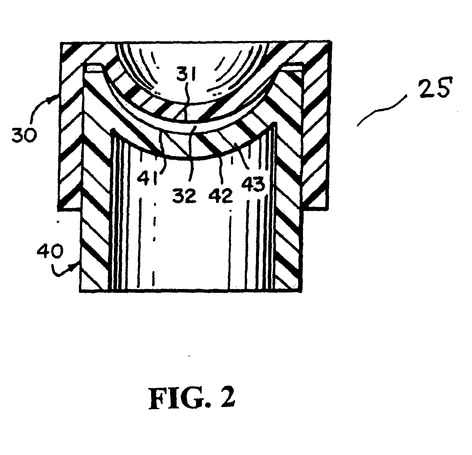

In general, a mold assembly of the present invention will include at least a mateable pair of mold parts in which at least one of the mold parts is formed from a polymeric resin comprising a polymer backbone and one or more pendent groups having peroxide functionality and covalently linked to the polymer backbone. A representative example of a mold assembly of this invention is generally depicted as mold assembly 25 in FIGS. 1 and 2. In general, the mold assembly includes posterior mold 30 having a posterior mold cavity defining surface 31 (which forms the posterior surface of the molded lens), and anterior mold 40 having an anterior mold cavity defining surface 41 (which forms the anterior surface of the molded lens). When the mold parts are assembled, a mold cavity 32 is formed between the two defining surfaces that correspond to the desired shape of the contact lens molded therein. As seen in FIGS. 1 and 2, anterior mold part 40 includes surface 42 opposed to anterior mold cavity defining surface 41, surfaces 41 and 42 defining segment 43 therebetween of mold part 40. Opposed surface 42 of mold 40 does not contact the polymerizable lens mixture in casting contact lenses, i.e., opposed surface 42 does not form part of mold cavity 32.

At least one of the mold parts, i.e., the anterior mold or posterior mold, of the mold assembly according to the present invention is injection molded from a polymeric resin comprising a polymer backbone and one or more pendent groups having peroxide functionality and covalently linked to the polymer backbone. The polymeric resin will include at least a polymer backbone and one or more pendent groups having peroxide functionality and covalently linked to the polymer backbone. In general, the polymeric material that forms the backbone of the polymeric resin can be a polyolefin. The polyolefin can be produced from one or more C₂ to C₂₀ alpha-olefin monomers. Representative examples of C₂ to C₂₀ alpha-olefin monomers include, but are not limited to, linear and branched alpha-olefins such as ethylene, propylene, 1-butene, 3-methyl-1-butene, 4-methyl-1-butene, 4-phenyl-1-butene, 1-pentene, 3-methyl-1-pentene, 4-methyl-1-pentene, 3,3-dimethyl-1-pentene, 3,4-dimethyl-1-pentene, 4,4-dimethyl-1-pentene, 1-hexene, 4-ethyl-1-hexene, 5-methyl-1-hexene, 6-phenyl-1-hexene, 1-octene, 1-decene, 1-dodecene, 1-tetradecene, 1-hexadecene, 1-octadecene, 1-eicocene and the like and mixtures thereof; and halogen-substituted, linear and branched alpha-olefins such as hexafluoropropene, tetrafluoroethylene, 2-fluoropropene, fluoroethylene, 1,1-difluoroethylene, 3-fluoropropene, trifluoroethylene, 3,4-dichloro-1-butene and the like and mixtures thereof.

Although various polyolefins can be used herein, the preferred polyolefin that forms the backbone of the polymeric resin is polypropylene. The polypropylene homopolymers can have a weight average molecular weight ranging from about 200,000 to about 2,000,000. By way of example, the invention will be described herein with reference to the polymer backbone being a polypropylene backbone.

In general, the polymeric resin can be prepared by first subjecting the polypropylene material used as the backbone of the polymeric resin to a radical forming means. For example, the polymeric resin can be prepared by first exposing the polypropylene material to high energy ionizing radiation in an essentially oxygen-free environment, i.e., an environment in which the active oxygen concentration is established and maintained at, e.g., about 0.004% by volume or less, to form a polypropylene radical. The ionizing radiation should have sufficient energy to penetrate to the extent desired the mass of propylene polymer material being irradiated. The ionizing radiation can be of any kind, but the most practical kinds are electrons and gamma rays. Preferred are electrons beamed from an electron generator having an accelerating potential of about 500 to about 4000 kilovolts. Satisfactory results can be obtained at a dose of ionizing radiation of about 0.1 to about 15 megarads ("Mrad"), and preferably about 0.5 to about 9.0 Mrad.

The term "rad" is usually defined as that quantity of ionizing radiation that results in the absorption of 100 ergs of energy per gram of irradiated material, regardless of the source of radiation. Energy absorption from ionizing radiation is measured by the well known conventional dosimeter, a measuring device in which a strip of polymer film containing a radiation-sensitive dye is the energy absorption sensing means. Therefore, the term "rad" means that quantity of ionizing radiation resulting in the absorption of the equivalent of 100 ergs of energy per gram of the polymer film of a dosimeter placed at the surface of the propylene polymer material being irradiated.

The free radical-containing irradiated propylene polymer material is then subjected to an oxidative treatment step to provide a propylene polymer containing peroxy radicals (i.e., RCOO*). Generally, the oxidative treatment step involves heating the free radical-containing irradiated propylene polymer material in the presence of a controlled amount of active oxygen in the range of, for example, greater than about 0.004% but less than about 15% by volume, preferably less than about 8%, and most preferably less than about 3%, to a temperature of about 25°C to about 140°C, more preferably about 40°C to about 100°C, and most preferably about 50°C to about 90°C. Heating to the desired temperature can be accomplished as quickly as possible, e.g., in less than about 10 minutes. The polymer is then held at the selected temperature, e.g., for about 5 to about 90 minutes, to increase the extent of reaction of the oxygen with the free radicals in the polymer. The holding time, which can easily be determined by one skilled in the art, will typically depend upon such factors as, for example, the properties of the starting material, the oxygen concentration used, the radiation dose, and the temperature. The maximum time is determined by the physical constraints of, for example, the fluid bed being used.

The oxidative treatment step can be carried out as one step, or the polymer can be heated in two steps, e.g., first at about 80°C and then at about 140°C, while exposing the free radical-containing irradiated propylene polymer material to the specified amount of oxygen. For example, one way of carrying out the treatment in two steps is to pass the polypropylene radical through a first fluid bed assembly operating at T₁ in the presence of a controlled amount of oxygen, and then through a second fluid bed assembly operating at T₂ in the presence of a controlled amount of oxygen within the same range as in the first step.

The expression "active oxygen" means oxygen in a form that will react with the free radical-containing irradiated propylene polymer material. It includes molecular oxygen, which is the form of oxygen normally found in air. The active oxygen content requirement can be achieved by use of a vacuum or by replacing part or all of the air in the environment by an inert gas such as, for example, nitrogen or argon.

The concentration of peroxide groups formed on the polymer can easily be controlled by varying the radiation dose and the amount of oxygen to which the polymer is exposed after irradiation. The oxygen level in the fluid bed gas stream is controlled by the addition of air at the inlet to the fluid bed. Air must constantly be added to compensate for the oxygen consumed by the formation of peroxide groups on the polymer. The fluidizing medium can be, for example, nitrogen or any other gas that is inert with respect to the free radicals present, e.g., argon, krypton and helium.

Next, the propylene polymer containing peroxy radicals can undergo a hydrogen abstraction reaction as known in the art to provide peroxide species that are chemically bound to the propylene polymer backbone. Alternatively, the propylene polymer containing peroxy radicals can be reacted with a second polymer containing peroxy radicals to provide peroxide species that are chemically bound to the propylene polymer. The second polymer containing peroxy radicals can be prepared in the same manner as the first polymer containing peroxy radicals.

Finally, the propylene polymer containing peroxide species that are chemically bound to the propylene polymer are subjected to heat treatment to obtain a polymeric resin comprising a propylene polymer backbone and one or more pendent groups having peroxide functionality and covalently linked to the polymer backbone. Suitable temperatures for heat treatment can vary widely according to such factors as, for example, the specific propylene polymer used, and can range from about 50°C to about 210°C. The reaction scheme for providing the polymeric resin comprising a propylene polymer backbone and one or more pendent groups having peroxide functionality and covalently linked to the polymer backbone is generally depicted in Scheme I below.

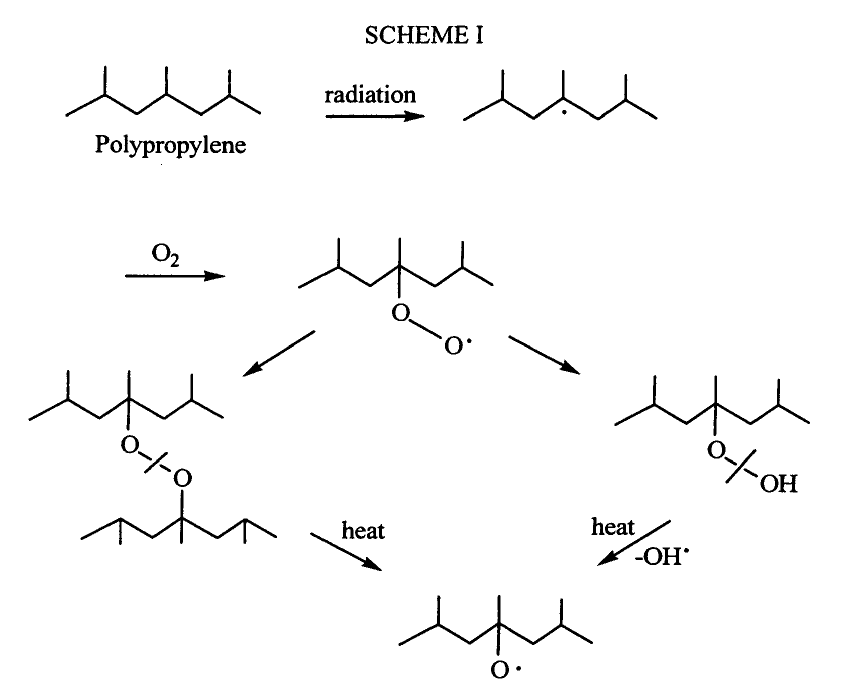

In one embodiment, one or more grafting monomers or polymers may then be grafted onto the polymeric resin comprising a propylene polymer backbone and one or more pendent groups having peroxide functionality and covalently linked to the polymer backbone. In general, the pendent groups having peroxide functionality in the propylene polymer backbone of the polymeric resin advantageously act as a source for free radicals. This, in turn, allows for the polymeric resin to react with an ethylenically unsaturated-containing radical to provide a graft polymeric product. Suitable grafting monomers and polymers that are capable of being grafted onto the polymeric resin include ethylenically unsaturated-containing radicals, such as, for example, unsaturated carboxylic acids, such as methacrylic and acrylic acids and the like; (meth)acrylic substituted alcohols, such as 2-hydroxyethylmethacrylate, 2-hydroxyethylacrylate, glyceryl methacrylate and the like; vinyl lactams, such as N-vinyl pyrrolidone and the like; (meth)acrylamides, such as methacrylamide, N,N-dimethylacrylamide and the like; vinyl alcohols, such as poly(vinyl alcohols) and the like; vinyl esters, such as vinyl acetate, poly(vinyl ester) polymers and the like; fluorinated polyolefin resins, such as polytetrafluoroethylene (Teflon^{®}), polyvinylidenefluoride, tetrafluoroethylene/vinylidenefluoride copolymer, tetrafluoroethylene/hexafluoropropylene copolymer, ethylene/tetrafluoroethylene copolymer and the like; polyethylene polymers, such as high density polyethylene (HDPE), low density polyethylene (LDPE), linear low density polyethylene (LLDPE), very low density polyethylene (VLDPE), and the like, polystyrene (PS), and the like and combinations thereof. If desired, the vinyl ester moieties of the vinyl ester grafting monomers and polymers (e.g., poly(vinyl ester) polymer groups) of the grafted polymer resin can be saponified to vinyl alcohol moieties by reaction with an alkali such as sodium or potassium alkoxide thereby forming poly(vinyl alcohol) polymer groups.

Grafting of the foregoing grafting monomers and polymers onto the polymeric resin may be accomplished by methods known in the art. As used herein, the term "grafting" denotes covalent bonding of the grafting monomers or polymers to a polymer chain of the polymeric resin. The grafted polymeric products may be prepared in solution, in a fluidized bed reactor, or by melt grafting as desired. In one embodiment, a grafted polymeric product may be conveniently prepared under polymer melt reaction conditions by melt blending the ungrafted polymeric resin in the substantial absence of a solvent, and in the presence of the grafting monomers and/or polymers in a suitable reactor, e.g., in an extrusion reactor, a heated melt-blend reactor, a Banbury mill, etc.

In this embodiment, the polymeric resin will undergo heat treatment such that the peroxide functionalities on the propylene polymer backbone will advantageously act as a source of free radicals thereby reacting with the ethylenically unsaturated-containing grafting monomers and polymers. The graft polymerization reaction may be carried out at any suitable temperature. Suitable temperature ranges will depend on such factors as, for example, the desired level of grafting, the graft polymerization rate as a function of temperature for the monomer(s) employed, etc. For example, a suitable temperature can range from about 215°C to about 350°C. However, one skilled in the art can readily determine suitable temperature ranges for a given grafting process.

To carry out the melt reaction, it is desirable to establish suitable reactor operating conditions for generating a grafted polymeric product having an effective percentage of or most or all of the grafting monomer and/or polymer grafted on the polymer. The grafting monomer and/or polymer should be grafted directly onto the polymeric resin, rather than forming dimeric, oligomeric, or homopolymeric graft moieties or, forming independent homopolymers.

One may generate a grafted polymeric product exhibiting the desired qualities and performance characteristics by selecting, for example, appropriate reactant feed rates as well as appropriate reactor operating conditions. These conditions include, among others, the proportions of the grafting monomer and polymer to the polymeric resin and as well as the design of the reactor and its operating conditions.

At least one of the mold parts, i.e., the anterior mold or posterior mold, of the mold assembly according to the present invention is injection molded from a polymeric resin comprising a polymer backbone and one or more pendent groups having peroxide functionality or a grafted polymeric product thereof. The other mold part, i.e., posterior mold or anterior mold, can be injection molded from the same or different polymeric resin or grafted polymeric product thereof. In one embodiment, both mold parts of the mold assembly of the present invention can be formed from the same polymeric resin as described above. In another embodiment, the mold parts can be formed from the same polymeric resin using varying amounts of the polymeric resin. Alternatively, the other mold part can be injection molded from a different resin than the polymeric resin comprising a polymer backbone and one or more pendent groups having peroxide functionality or grafted polymeric product thereof in an injection molding apparatus. Representative examples of other resins include, but are not limited to, thermoplastic resins, clear resins and the like. Suitable thermoplastic resins can be those polymers and copolymers which contain predominantly polyolefins such as polyethylene, polypropylene, polystyrene and the like and mixtures thereof. Suitable clear resins can be polyvinyl chloride (PVC), polyester, polysulfone, poly(meth)acrylate, polycarbonate and the like and mixtures thereof. If desired, the clear resin molds can be coated using coating compositions known in the art. Clear resins are generally more amorphous and, therefore, more dimensionally stable than polypropylene, but are also capable of transmitting a greater percentage of actinic light.

Other mold parts include those made from an oxygen-absorbing mold material (e.g., a polyolefin such as polypropylene) and an oxygen scavenger composition containing at least (i) an oxygen scavenging polymer comprising a polymer backbone and one or more substituted or unsubstituted cyclic olefinic groups covalently linked to the polymer backbone; and (ii) an oxygen scavenging catalytic amount of a transition metal catalyst. Oxygen scavenger compositions useful in the context of this invention, as well as methods for their preparation, have been described in, for example, U.S. Patent No. 7,097,890 and U.S. Patent Application Publication No. 20060177653.

The mold assemblies of the present invention are particularly useful for improving the surface quality of contact lenses manufactured by cast molding processes using, for example, free radical polymerization techniques. Generally, the composition of the contact lenses, the molding process, and polymerization processes are well known and this invention is concerned primarily with forming the mold assembly to achieve contact lenses with improved surface characteristics and decreased frequency of cosmetic defects.

The mold assemblies of the present invention can be used with all contact lenses such as, for example, conventional hard, soft and rigid gas permeable lenses, and the composition of the monomer mix and the specific monomers used to form the lenses are not critical. The present invention is preferably employed with soft contact lenses such as those commonly referred to as hydrogel lenses, e.g., silicone hydrogel lenses, prepared from at least silicone and/or non-silicone monomers including, but not limited to, hydroxyethyl methacrylate, N-vinyl-pyrrolidone, glycerol methacrylate, methacrylic acid and acid esters. However, any combination of lens forming monomers in a monomeric mixture capable of forming a polymer useful in making contact lenses may be used. Hydrophobic lens forming monomers may also be included such as those containing silicone moieties. The degree of polymerization and/or the crosslinking density at the surface of the lens is believed to be improved in all contact lenses, even those which do not typically exhibit cosmetic defects. Thus, the term "contact lenses" as used herein includes hard, soft, and rigid gas permeable contact lenses as well as inocular lenses.

The monomer mix used in forming the contact lenses useful with the mold assemblies of the present invention can also include crosslinking agents, strengthening agents, free radical initiators and/or catalysts and the like as is well known in the art. Further, suitable solvents or diluents can be employed in the monomer mix, provided such solvents or diluents do not adversely affect or interfere with the polymerization process.

The method of polymerization or cure is not critical to the practice of this invention, except that this invention is particularly suitable to free radical polymerization systems as are well known in the contact lens art. Thus, the polymerization can occur by a variety of mechanisms depending on the specific composition employed. For example, thermal, photo, X-ray, microwave, and combinations thereof which are free radical polymerization techniques can be employed herein. Preferably, thermal and photo polymerizations are used in this invention with UV polymerization being most preferred.

In general, the molded lenses are formed by depositing a curable liquid such as a polymerizable monomer and/or macromer into a mold cavity of the mold section of the mold assembly of the present invention, curing the liquid into a solid state, opening the mold cavity and removing the lens. Other processing steps such as hydration of the lens can then be performed. Cast molding techniques are also well known. Generally, conventional cast molding techniques employ thermoplastic male and female mold halves of predetermined configuration which imparts the desired shape and surface configurations to the lenses formed therebetween. Examples of cast molding processes are disclosed in U.S. Patent Nos. 4,113,224; 4,121,896; 4,208,364; and 4,208,365. Of course, many other cast molding teachings are available which can be used with the present invention providing the molds are made from thermoplastic materials.

It will be understood that various modifications may be made to the embodiments disclosed herein. Therefore the above description should not be construed as limiting, but merely as exemplifications of preferred embodiments. For example, the functions described above and implemented as the best mode for operating the present invention are for illustration purposes only. Other arrangements and methods may be implemented by those skilled in the art without departing from the scope of this invention.

## Claims

1. A mold assembly for the manufacture of at least one ophthalmic device used in or on the eye, the mold assembly comprising a mateable pair of mold parts wherein at least one of the mold parts is made from a polymeric resin comprising a polymer backbone and one or more pendent groups having peroxide functionality and covalently linked to the polymer backbone.

2. The mold assembly of Claim 1, wherein the polymer backbone of the polymeric resin comprises polypropylene.

3. The mold assembly of Claim 1, wherein an ethylenically unsaturated-containing radical is grafted to the polymeric resin.

4. The mold assembly of Claim 3, wherein the ethylenically unsaturated-containing radical is selected from the group consisting of an unsaturated carboxylic acid, (meth)acrylic substituted alcohol, vinyl lactam, (meth)acrylamide, vinyl alcohol, vinyl ester, fluorinated polyolefin resin, polyethylene polymer and combinations thereof

5. The mold assembly of Claim 4, wherein the unsaturated carboxylic acid comprises a methacrylic or acrylic-containing acid.

6. The mold assembly of Claim 4, wherein the (meth)acrylic substituted alcohol is selected from the group consisting of 2-hydroxyethylmethacrylate, 2-hydroxyethylacrylate, glyceryl methacrylate and combinations thereof.

7. The mold assembly of Claim 4, wherein the vinyl lactam is an N-vinyl pyrrolidone.

8. The mold assembly of Claim 4, wherein the (meth)acrylamide is selected from the group consisting of methacrylamide, N,N-dimethylacrylamide and combinations thereof

9. The mold assembly of Claim 4, wherein the vinyl alcohol comprises a poly(vinyl alcohol).

10. The mold assembly of Claim 4, wherein the vinyl ester is vinyl acetate or a poly(vinyl ester) polymer.

11. The mold assembly of Claim 4, wherein the fluorinated polyolefin resin is a polytetrafluoroethylene resin.

12. The mold assembly of Claim 4, wherein the polyethylene polymer is selected from the group consisting of high density polyethylene (HDPE), low density polyethylene (LDPE), linear low density polyethylene (LLDPE), very low density polyethylene (VLDPE) and combinations thereof

13. The mold assembly of Claim 3, wherein each mateable pair of mold parts comprises the same or different polymeric resin or grafted polymeric product thereof.

14. A method of preparing a mold assembly for the manufacture of at least one ophthalmic device used in or on the eye, the method comprising the step of injection molding the parts of the mold assembly comprising at least one anterior and one posterior mold part, wherein at least one of the anterior and one posterior mold part comprises a polymeric resin comprising a polymer backbone and one or more pendent groups having peroxide functionality and covalently linked to the polymer backbone.

15. The method of Claim 14, wherein the polymer backbone of the polymeric resin comprises a polyolefin.

16. The method of Claim 15, wherein the polyolefin is polypropylene.

17. The method of Claim 14, wherein the polymer backbone of the polymeric resin comprises polypropylene.

18. The method of Claim 14, wherein an ethylenically unsaturated-containing radical is grafted to the polymeric resin.

19. The method of Claim 18, wherein the ethylenically unsaturated-containing radical is selected from the group consisting of an unsaturated carboxylic acid, (meth)acrylic substituted alcohol, vinyl lactam, (meth)acrylamide, vinyl alcohol, vinyl ester, fluorinated polyolefin resin, polyethylene polymer and combinations thereof.

## Patentansprüche

1. Eine Umformeinheit zur Herstellung wenigstens einer ophthalmischen Vorrichtung, die im oder auf dem Auge benutzt wird, wobei die Umformeinheit ein Paar steckbarer Formelemente umfasst, wobei wenigstens eines der Formelemente aus einem Polymerharz hergestellt wird, welches eine Polymerhauptkette und eine oder mehrere Seitengruppen umfasst, die eine Peroxidfunktionalität aufweisen und kovalent an die Polymerhauptkette gebunden sind.

2. Die Umformeinheit gemäß Anspruch 1, wobei die Polymerhauptkette des Polymerharzes Polypropylen umfasst.

3. Die Umformeinheit gemäß Anspruch 1, wobei ein ethylenische Ungesättigtheiten enthaltendes Radikal auf das Polymerharz gepfropft wird.

4. Die Umformeinheit gemäß Anspruch 3, wobei das ethylenische Ungesättigtheiten enthaltende Radikal aus einer Gruppe ausgewählt wird, die aus ungesättigten Carbonsäuren, (Meth)acryl-substituierten Alkoholen, Vinyllactam, (Meth)acrylamid, Vinylalkohol, Vinylester, fluorierten Polyolefinharzen, Polyethylen und Kombinationen daraus besteht.

5. Die Umformeinheit gemäß Anspruch 4, wobei die ungesättigten Carbonsäuren Methacrylsäure oder Acrylsäure umfassen.

6. Die Umformeinheit gemäß Anspruch 4, wobei der (Meth)acryl-substituierte Alkohol aus einer Gruppe ausgewählt wird, die aus 2-Hydroxyethylmethacrylat, 2-Hydroxyethylacrylat, Glycerylmethacrylat und Kombinationen daraus besteht.

7. Die Umformeinheit gemäß Anspruch 4, wobei das Vinyllactam N-Vinylpyrrolidon ist.

8. Die Umformeinheit gemäß Anspruch 4, wobei das (Meth)acrylamid aus einer Gruppe ausgewählt wird, die aus Methacrylamid, N,N-Dimethylacrylamid und Kombinationen daraus besteht.

9. Die Umformeinheit gemäß Anspruch 4, wobei der Vinylalkohol Poly(vinylalkohol) umfasst.

10. Die Umformeinheit gemäß Anspruch 4, wobei der Vinylester Vinylacetat oder ein Poly(vinylester)polymer ist.

11. Die Umformeinheit gemäß Anspruch 4, wobei das fluorierte Polyolefinharz ein Polytetrafluorethylen-Harz ist.

12. Die Umformeinheit gemäß Anspruch 4, wobei das Polyethylenpolymer aus einer Gruppe ausgewält wird, die aus Polyethylen hoher Dichte (HDPE), Polyethylen geringer Dichte (LDPE), linearem Polyethylen geringer Dichte (LLDPE), Polyethylen sehr geringer Dichte (VLDPE) und Kombinationen daraus besteht.

13. Die Umformeinheit gemäß Anspruch 3, wobei jedes Paar steckbarer Formelemente die gleichen oder unterschiedlichen Polymerharzen oder gepfropfte Polymere daraus umfasst.

14. Ein Verfahren zum Herstellen einer Umformeinheit zur Herstellung wenigstens einer ophthalmischen Vorrichtung, die im oder auf dem Auge benutzt wird, wobei das Verfahren den Schritt des Spritzgussverfahrens der Teile der Umformeinheit umfasst, welche wenigstens ein vorderes und ein hinteres Formelementteil umfasst, wobei wenigstens ein vorderes und ein hinteres Formelementteil ein Polymerharz umfasst, welches eine Polymerhauptkette und eine oder mehrere Seitengruppen umfasst, die eine Peroxidfunktionalität aufweisen und kovalent an die Polymerhauptkette gebunden sind.

15. Das Verfahren gemäß Anspruch 14, wobei die Polymerhauptkette des Polymerharzes Polypropylen umfasst.

16. Das Verfahren gemäß Anspruch 15, wobei das Polyolefin Polypropylen ist.

17. Das Verfahren gemäß Anspruch 14, wobei die Polymerhauptkette des Polymerharzes Polypropylen umfasst.

18. Das Verfahren gemäß Anspruch 14, wobei ein ethylenische Ungesättigtheiten enthaltendes Radikal auf das Polymerharz gepfropft wird.

19. Das Verfahren gemäß Anspruch 18, wobei das ethylenische Ungesättigtheiten enthaltende Radikal aus einer Gruppe ausgewählt wird, die aus ungesättigten Carbonsäuren, (Meth)acryl-substituierten Alkoholen, Vinyllactam, (Meth)acrylamid, Vinylalkohol, Vinylester, fluorierten Polyolefinharzen, Polyethylen und Kombinationen daraus besteht.

## Revendications

1. Assemblage de moule pour la fabrication d'au moins un dispositif ophtalmique utilisé dans ou sur l'oeil, l'assemblage de moule comprenant une paire appariable de parties de moule dans laquelle au moins l'une des parties de moule est faite à partir d'une résine polymère comprenant une charpente polymère et un ou plusieurs groupes pendants ayant une fonctionnalité peroxyde et liés de façon covalente à la charpente polymère.

2. Assemblage de moule selon la revendication 1, dans lequel la charpente polymère de la résine polymère comprend du polypropylène.

3. Assemblage de moule selon la revendication 1, dans lequel un radical à insaturation éthylénique est greffé sur la résine polymère.

4. Assemblage de moule selon la revendication 3, dans lequel le radical à insaturation éthylénique est choisi dans le groupe constitué par un acide carboxylique insaturé, un alcool à substitution (méth)acrylique, le vinyl-lactame, le (méth)acrylamide, l'alcool vinylique, un ester vinylique, une résine de polyoléfine fluorée, un polymère de polyéthylène, et leurs combinaisons.

5. Assemblage de moule selon la revendication 4, dans lequel l'acide carboxylique insaturé comprend un acide contenant un radical méthacrylique ou acrylique.

6. Assemblage de moule selon la revendication 4, dans lequel l'alcool à substitution (méth)acrylique est choisi dans le groupe constitué par le méthacrylate de 2-hydroxyéthyle, l'acrylate de 2-hydroxyéthyle, le méthacrylate de glycéryle et leurs combinaisons.

7. Assemblage de moule selon la revendication 4, dans lequel le vinyl-lactame est la N-vinylpyrrolidone.

8. Assemblage de moule selon la revendication 4, dans lequel le (méth)acrylamide est choisi dans le groupe constitué par le méthacrylamide, le N,N-diméthylacrylamide et leurs combinaisons.

9. Assemblage de moule selon la revendication 4, dans lequel l'alcool vinylique comprend un poly(alcool vinylique).

10. Assemblage de moule selon la revendication 4, dans lequel l'ester vinylique est l'acétate de vinyle ou un polymère de poly(ester vinylique).

11. Assemblage de moule selon la revendication 4, dans lequel la résine de polyoléfine fluorée est une résine de polytétrafluoroéthylène.

12. Assemblage de moule selon la revendication 4, dans lequel le polymère de polyéthylène est choisi dans le groupe constitué par le polyéthylène haute densité (HDPE), le polyéthylène basse densité (LDPE), le polyéthylène basse densité linéaire (LLDPE), le polyéthylène très basse densité (VLDPE), et leurs combinaisons.

13. Assemblage de moule selon la revendication 3, dans lequel chaque paire appariable de parties de moule comprend des résines polymères ou produits polymères greffés de celles-ci identiques ou différents.

14. Procédé pour préparer un assemblage de moule pour la fabrication d'au moins un dispositif ophtalmique utilisé dans ou sur l'oeil, lequel procédé comprend l'étape consistant à mouler par injection les parties de l'assemblage de moule comprenant au moins une partie de moule antérieure et une autre postérieure, dans lequel au moins l'une parmi les parties de moule antérieure et postérieure comprend une résine polymère comprenant une charpente polymère et un ou plusieurs groupes pendants ayant une fonctionnalité peroxyde et liés de façon covalente à la charpente polymère.

15. Procédé selon la revendication 14, dans lequel la charpente polymère de la résine polymère comprend une polyoléfine.

16. Procédé selon la revendication 15, dans lequel la polyoléfine est le polypropylène.

17. Procédé selon la revendication 14, dans lequel la charpente polymère de la résine polymère comprend du polypropylène.

18. Procédé selon la revendication 14, dans lequel un radical à insaturation éthylénique est greffé sur la résine polymère.

19. Procédé selon la revendication 18, dans lequel le radical à insaturation éthylénique est choisi dans le groupe constitué par un acide carboxylique insaturé, un alcool à substitution (méth)acrylique, le vinyl-lactame, le (méth)acrylamide, l'alcool vinylique, un ester vinylique, une résine de polyoléfine fluorée, un polymère de polyéthylène, et leurs combinaisons.
